# EUROPEAN PATENT SPECIFICATION

(11) **EP 1 855 501 B1**
(45) Date of publication and mention of the grant of the patent: **14.10.2009**
(21) Application number: 07016648.3
(22) Date of filing: 12.02.1999
(51) Int. Cl.: H04W 52/12

(54) **Method and system for performing a handoff in a wireless communication system, such as a hard handoff**
Verfahren und System zur Durchführung einer Weiterleitung in einem drahtlosen Kommunikationssystem, z. B. einer harten Weiterleitung
Procédé et système pour effectuer un transfert dans un système de communication sans fil, de type transfert intercellulaire avec coupure

(30) Priority: 13.02.1998 US 74733 P; 11.02.1999 US 248701; 11.02.1999 US 248700
(43) Date of publication of application: 14.11.2007
(62) Divisional of application: 05007867.4
(73) Proprietor: QUALCOMM Incorporated, San Diego CA 92121-1714 (US)
(72) Inventor: Odenwalder, Joseph P., San Diego CA 92121-1714 (US)
(74) Representative: Carstens, Dirk Wilhelm

(56) References cited:
- EP-A- 0 566 551
- EP-A- 0 748 140
- WO-A-97/29611

## Description

### I. Field of the Invention

The invention relates to wireless communication system, and, more particularly, to methods and apparatus for providing hard handoffs between cells in such systems.

### BACKGROUND OF THE INVENTION

In a code division multiple access (CDMA) system, the vast majority of handoffs happen between cells on the same CDMA channel and use soft handoff procedures. On some occasions, the mobile stations need to perform a handoff between cells on different CDMA channels where such channels are at different radio frequencies (FR), often denoted as inter-frequency hard handoff. Such situations are typically, but not limited to, either a handoff between different operators, a handoff between different RF channels allocated for capacity reasons, or a handoff between different signal modulation technologies.

Before effecting an inter-frequency hard handoff, the mobile station is directed by the base station to tune to the new target frequency, measure the radio environment (*e.g*., pilot signal strength of the received signals, etc.), and report the measurement back to the base station. Such a procedure is specified in TIA/EIA-95-B and greatly enhances the probability of success of an inter-frequency handoff.

An essential requirement of the measurements on the target frequency, often referred to as "search excursion," is to minimize the disruption of the current service on the originating frequency. Handoffs to a second frequency without adequate prior sampling could result in poor signal performance. On the other hand, sampling for long periods of time may cause the signal at the first frequency to be lost completely. The method described below permits the mobile station to minimize the search time and to limit the disruption of service.

Attention is drawn to WO 97/29611 A which describes a method and apparatus for determining the fidelity of one or more communications channels with high efficiency and resolution with particularly advantageous application to digital communications in a radio communications environment where portable radios roaming across multiple RF site coverage areas strive to monitor the optimal control channel having the highest signal fidelity under current receiving conditions. The radio collects signal fidelity information for alternative communications channel in very short time intervals without missing important messages on a communication channel currently being monitored by that radio. Signal fidelity of the alternative communications channel is calculated without the radio being synchronized either at a digital bit or frame level to the alternative communications channel. The fidelity calculation provides information both about the accuracy (i.e., the digital value of a received digital pulse) and the quality (i.e., the level of distortion of the received pulse) of the received signal.

### SUMMARY OF THE INVENTION

In accordance with the present invention a method for frequency search excursion measurement in a wireless communication system, as set forth in claim 1, and an apparatus for frequency search excursion measurement in a wireless communication system, as set forth in claim 7, are provided. Preferred embodiments are disclosed in the dependent claims.

The invention overcomes the limitations described above, and provides additional benefits by providing a method and apparatus that minimizes the search time to another frequency and limits the disruption of service. This method is applicable to all types of services (voice, packet data, circuit data, signaling) the mobile station is connected to, and does not depend on the number of dedicated code channels assigned on the forward link and the reverse link.

One aspect of the invention involves receiving a frequency change command at a user station, such as a mobile station, to switch from receiving a signal on a first frequency to receiving a signal on a target frequency; tuning the mobile station to the target frequency and collecting and storing signal samples; tuning the mobile station to the first frequency and processing the signal samples; and transmitting signal sample processing results to a base station.

In accordance with another embodiment of the invention, a wireless communication system is disclosed herein that includes a user station, such as a mobile station, having at least a transmitter circuit, a receiver circuit, and a memory buffer. The mobile station is configured to receive a frequency change command from a base station to switch to a target frequency, to tune to the target frequency and collect and store signal samples in the memory buffer, to tune back to a first frequency and process the stored signal samples, and to transmit sample processing results to the base station. The mobile station can be further configured to minimize the loss of forward and reverse link symbols during switching to the target frequency by increasing the amount of power allocated to the other symbols of a frame impacted by the switch to the target frequency. The additional amount of power to be allocated to the symbols not impacted by the switch to the target frequency for the frame to be demodulated is a function of the time the mobile station is at the target frequency.

### BRIEF DESCRIPTION OF THE DRAWINGS

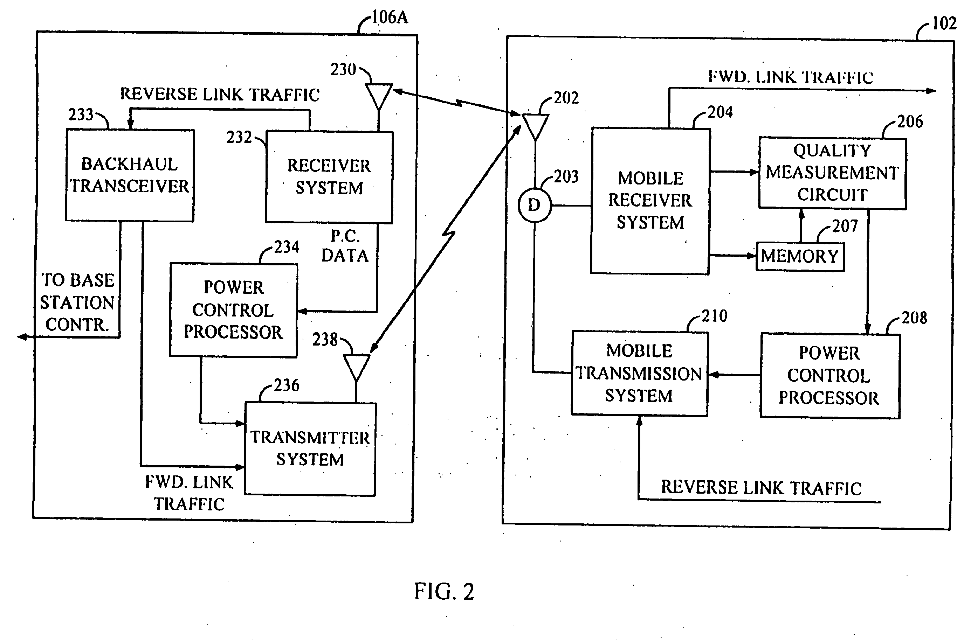

In the figures, like reference numbers identify similar elements. For ease in identifying the discussion of any particular element, the most significant digit in a reference number refers to the figure number in which that element is first introduced (*e.g*., element 204 is first introduced and discussed with respect to FIG. 2).
FIG. 1 illustrates a typical wireless communication system that can employ the invention.
FIG. 2 is a block diagram of typical components found in the wireless communication system of FIG. 1 that can employ the invention.
FIG. 3 is a timing diagram of an inter-frequency search excursion.
FIG. 4 is a flowchart of a method for performing a frequency search excursion under an embodiment of the invention.
FIG. 5 is a graph of power verses time that illustrates the succession of forward link power levels related to inter-frequency search excursions.
FIG. 6 is a graph of power versus time that illustrates a reverse link power increase during search excursion.
FIG. 7 is a flowchart of a method for performing a frequency search excursion while minimizing disruption of service in accordance with another embodiment of the invention.

### DETAILED DESCRIPTION OF THE

### PREFERRED EMBODIMENTS

A wireless communication system, and, in particular, a method and apparatus for minimizing search excursion time to a target frequency and disruption of current service on an originating frequency is described in detail herein. In the following description, numerous specific details are provided to give a thorough understanding of the invention. One skilled in the relevant technology, however, will readily recognize that the invention can be practiced without these specific details or with alternative elements or steps. In other instances, well-known structures and methods are not shown in detail to avoid obscuring the invention.

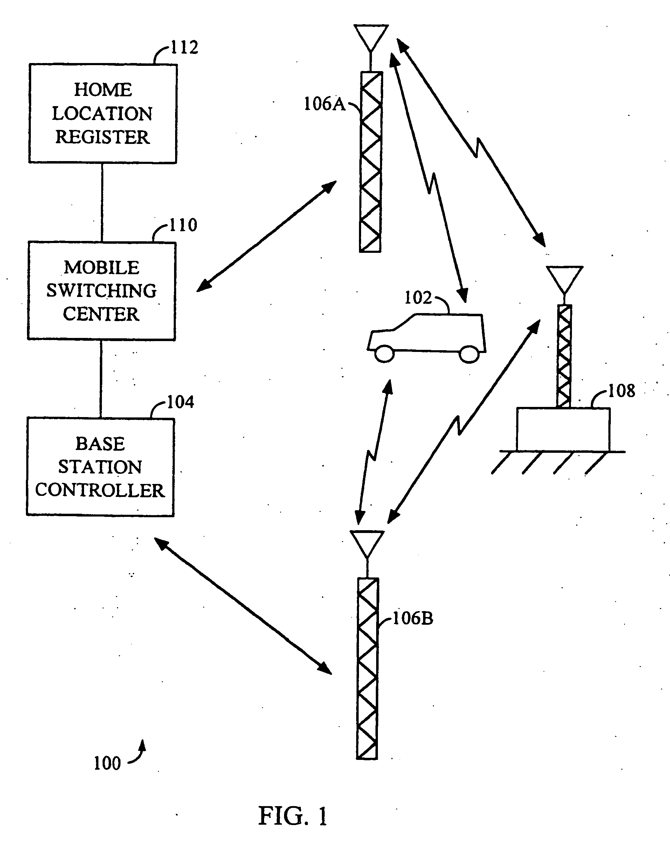

FIG. 1 illustrates a cellular subscriber communication system 100 that uses multiple access techniques, such as code division multiple access (CDMA) for communicating between users of user stations (*e.g*., mobile telephones) and cell sites or base stations. In FIG. 1, a mobile user station 102 communication with a base station controller **104** by means of one or more base stations **106a, 106b,** etc. Similarly, a fixed user station 108 communicates with the base station controller **104,** but by means of only one or more predetermined and proximate base stations, such as the base stations **106a** and **106b.**

The base station controller **104** is coupled to and typically includes interface and processing circuitry for providing system control to the base stations **106a** and **106b.** The base station controller **104** may also be coupled to and communicate with other base stations, and possibly even other base station controllers. The base station controller **104** is coupled to a mobile switching center **110** that in turn is coupled to a home location register **112.** During registration of each user station at the beginning of each call, the base station controller **104** and the mobile switching center **110** compare registration signals received from the user stations to data contained in the home location register **112,** as is known in the art. Handoffs may occur between the base station controller **104** and other base controllers, and even between the mobile switching center **110** and other mobile switching centers, as is known by those skilled in this technology.

When the system **100** processes voice or data traffic calls, the base station controller **104** establishes, maintains, and terminates the wireless link with the mobile station **102** and the fixed station **108,** while the mobile switching center **110** establishes, maintains, and terminates communications with a public switched telephone network (PSTN). While the discussion below focuses on signals transmitted between the base station **106a** and the mobile station **102,** those skilled in this technology will recognize that the discussion equally applies to other base stations and to the fixed station **108.** The terms "cell" and "base station" are generally used interchangeably herein.

Referring to FIG. 2, the mobile station **10** includes an antenna **202** that transmits signals to, and receives signals from the base station 106a. A duplexer **203** provides a forward link channel or signal from the base station **106a** to a mobile receiver system **204.** The receiver system **204** down-converts, demodulates, and decodes the received signal. The receiver system **204** then provides a predetermined parameter or set of parameters to a quality measurement circuit **206.** Examples of parameters might include measured signal to noise ratio (SNR), measured received power, or decoder parameters such as symbol error rate, Yamamoto metric, or parity bit check indication. A memory buffer **207** can be included for use with the invention described herein. Additional details regarding operation of the mobile station **102** (and the base station **106a**) are found, for example, in U.S. Patent No. 5,751,725, entitled "METHOD AND APPARATUS FOR DETERMINING THE RATE OF RECEIVED DATA IN A VARIABLE RATE COMMUNICATION SYSTEM," assigned to the assignee of the present invention, and incorporated by reference herein.

The quality measurement circuit **206** receives the parameters from the receiver system **204** and determines a quality measurement signal or power level of the received signal. The quality measurement circuit **206** can generate energy per bit (E_{b}) or energy per symbol (Eₛ) measurements from portions or windows of each frame. Preferably, the energy per bit or energy per symbol measurements are normalized (*e.g*., E_{b}/Nₒ), or normalized and include interference factors (*e.g*., E_{b}/Nₜ), as is known in the art. Based on these measurements, the quality measurement circuit 206 produces a power level signal.

A power control processor **208** receives the power level signal from the quality measurement circuit **206,** compares the signal to a threshold, and produces a power control message based on the comparison. Each power control message can indicate a change in power for the forward link signal. Alternatively, power control processor **208** produces power control messages representing the absolute power of the received forward link signal, as is known in the art. The power control processor **208** produces preferably several (*e.g*., sixteen) power control messages in response to several power level signals per frame. While the quality measurement circuit **206** and power control processor **208** are generally described herein as separate components, such components can be monolithically integrated, or the operations performed by such components can be performed by a single microprocessor.

A mobile transmission system **210** encodes, modulates, amplifies, and up converts the power control messages, via the duplexer **203** and the antenna **202.** In the illustrated embodiment, the mobile transmission system **210** provides the power control message in a predetermined location of an outgoing reverse link frame.

The mobile transmission system **210** also receives reverse link traffic data, such as voice or general computer data, from the user of the mobile station. The mobile transmission system **210** requests a particular service (including power/rate) from the base station **106a** based on the traffic data to be transmitted. In particular, the mobile transmission system **210** requests bandwidth allocation appropriate for the particular service. The base station **106a** then schedules or allocates bandwidth (power/rate) resources based on requests from the mobile station **102** and other users to optimize such resource allocation, given power constraints of the system. Thus, effectively managing transmission power in the system will permit more effective bandwidth use.

The base station **106a** includes a receiving antenna **230** that receives the reverse link frames from the mobile station **102.** A receiver system **232** of the base station **106a** down converts, amplifies, demodulates, and decodes the reverse link traffic. A backhaul transceiver **233** receives and forwards to the base station controller **104** reverse link traffic. The receiver system **232** also separates the power control messages from each reverse link traffic frame and provides the power control messages to a power control processor **234.**

The power control processor **234** monitors the power control messages and produces a forward link transmitter power signal to a forward link transmitter system **236.** The forward link transmitter system **236,** in response thereto, either increases, maintains, or decreases the power of the forward link signal. The forward link signal is then transmitted via a transmitting antenna **238.** Additionally, the power control processor **234** analyzes the quality of the reverse link signal from the mobile station **102** and provides appropriate feedback control messages to the forward link transmitter system **236.** The forward link transmitter system **236,** in response thereto, transmits the feedback control messages via the transmitting antenna **238** over the forward link channel to the mobile station **102.** The transmitter system **236** also receives forward link traffic data from the base station controller **104** via the backhaul transceiver 233. The forward link transmitter system **236** encodes, modulates, and transmits via the antenna **238** the forward link traffic data.

Unless described otherwise herein, the construction and operation of the various blocks and elements shown in FIGS. 1 and 2 and the other figures are of conventional design and operation. Thus, such blocks or elements need not be described in further detail because they will be understood by those skilled in the relevant art. Any additional description is omitted for brevity and to avoid obscuring the detailed description of the invention. Any modifications necessary to the blocks of the communication system **100** of FIGS. 1 and 2, or the other systems shown therein can be readily made by one skilled in the relevant art based on the detailed description provided herein.

The closed-loop power control system for user stations, including the mobile station **102** and base station **106a,** dynamically adjusts the transmit power for each user based on the user's propagation conditions to yield the same frame error rate (FER) for each user for voice services (*e.g*., a 1% FER). As noted above, many users, however, may request transmission for data services in lieu of voice services, such as facsimile, e-mail and general computer data, all of which are insensitive to delay but require a lower FER (or lower bit error rate (BER)). A user may even require video services, which not only require a lower FER but are sensitive to delay. The base station 106a dynamically assigns transmission rates based on requests from each user under known techniques.

Under one CDMA standard, described in the Telecommunications Industry Association's TIA/EIA-95-A Mobile Stations-Base Station Compatibility Standard For Dual-Mode Wideband Spread Spectrum Cellular System, each base station transmits pilot, sync, paging, and forward traffic channels to its users. The pilot channel is an unmodulated, direct-sequence spread spectrum signal transmitted continuously by each base station. The pilot channel enables each user to acquire the timing of the channels transmitted by the base station, and it provides a phase reference for coherent demodulation. The pilot channel also provides a means for signal strength comparisons between base stations to determine when to hand off between base stations (such as when moving between cells). Recent CDMA modulation techniques have been proposed using dedicated time multiplexes ("DTMP") pilot symbols. Under the DTMP approach, separate pilot symbols are time multiplexed on each user's traffic channel. Each user sequentially de-spreads the pilot symbols (and information symbols). There is also an alternative common code multiplexed pilot ("CCMP") approach, where one co-channel is dedicated to broadcasting a pilot signal. No pilot symbols are multiplexed with dedicated channels, and all users de-spread both the pilot symbols and the modulated information signals in parallel. Such systems are described in more detail in U.S. Patent Application No. 09/144,402, filed August 31, 1998, entitled METHOD AND APPARATUS FOR REDUCING AMPLITUDE VARIATIONS AND INTERFERENCE IN COMMUNICATION SIGNALS, SUCH AS WIRELESS COMMUNICATION SIGNALS EMPLOYING INSERTED PILOT SYMBOLS, assigned to the same assignee of this invention.

### Inter-Frequency Search

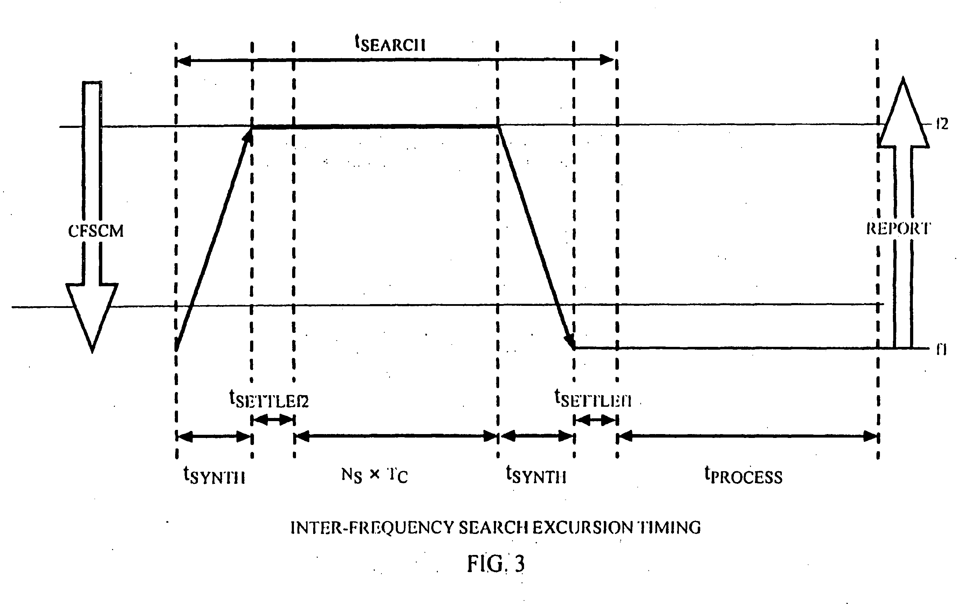

Referring next to FIG. 3, shown therein is a diagram of the different timing involved in performing a search excursion. While FIG. 3 would be self-explanatory to one of ordinary skill in the relevant art, a brief explanation is provided. The reference t_{search} corresponds to the time required to collect the N samples on frequency f2. The total time will be t_{search} plus the time it takes to process the samples after returning to the original frequency f1. The times t_{synth} and tₛₑₜₜₗₑ correspond to the time required to switch and settle at a new frequency, respectively. The time period of Nₛ x T_{c} represents the sampling time for Nₛₐₘₚₗₑₛ, and t_{process} represents the time to process the samples.

A method for minimizing the search time to another frequency can be described as follows:
First, the mobile station is currently demodulating an original or first frequency f1 An inter-frequency hard handoff to a target frequency f2 might be required, such as when certain signal quality measurements (*e.g*., those noted above) fall below predetermined thresholds. When reporting such dropping quality to the base station 106a, the mobile station 102 is directed by the base station (*e.g*., via a Candidate Frequency Search Request/Control Message ("CFSCM")) to perform a search excursion to a target frequency f2.

The mobile station tunes to frequency f2 and collects N chip samples (a chip being one bit of pseudonoise at, for example, 1024 bps for orthogonally encoded symbols). The samples are stored in a memory buffer; the mobile station does not perform pilot searches and pilot strength measurements while on frequency f2. The mobile station tunes back to the original frequency f1, resumes reception of forward link and transmission of reverse link, and processes the N samples collected on frequency f2 simultaneously.

The mobile station processes the samples collected on frequency f2 using a searcher that processes the stored samples while simultaneously processing the signal received on the original frequency f1. The mobile station reports to the base station the corresponding pilot strength measurements from frequency f2. One of skill in this technology will recognize the searcher referred to above and would have the requisite skill to provide or obtain the same.

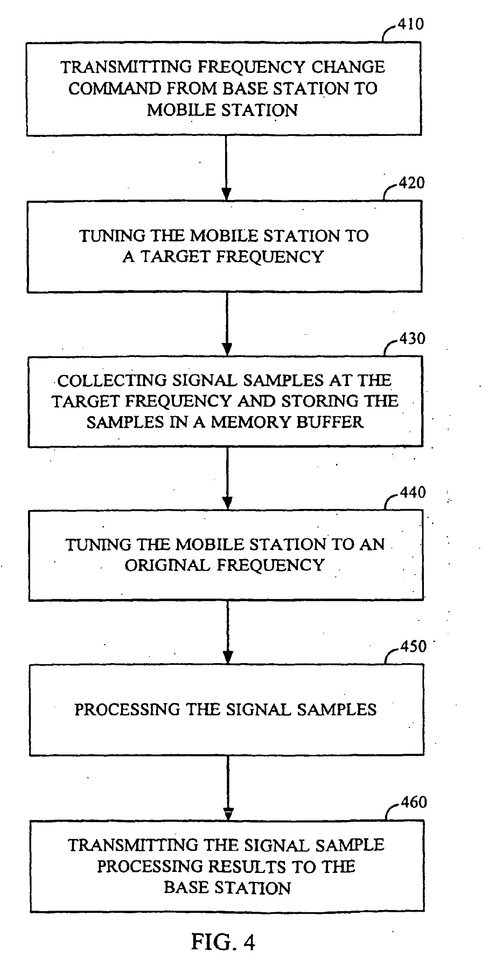

The foregoing method is illustrated in FIG. 4 as a routine 400 that begins in step 410 where the base station 106a transmits a frequency change command to the mobile station 102 under a Candidate Frequency Search Request Control Message as defined by TIA/EIA-95-B Standard incorporated by reference. In response to this command, the mobile station 102 tunes to the target frequency f2 under step 420.

In step **430,** the mobile station **102** collects signal samples at the target frequency f2 and locally stores the samples in the memory buffer **207.** Under step **440,** the mobile station **102** tunes back to the first frequency f1 and processes the signal samples stored in the memory buffer **207** under step 450. Note, steps **440** and **450** can be performed concurrently.

After the signal samples are processed as described above, the mobile station **102** under step 460 transmits the signal sample processing results to the base station **106a.**

### Minimizing Impact of Search Excursion on Current Frame

When the mobile station tunes to another frequency f2 to perform an inter-frequency search, forward link symbols transmitted by the base station during the t_{search} time period cannot be received by the mobile station. Similarly, the mobile station does not transmit during t_{search} and the base station loses reverse link symbols during the t_{search} time period. To minimize the impact of this loss on both the current forward and reverse link frames, the mobiles and base stations increase the amount of power allocated to the other symbols of the forward-error-correction-encoded and interleaved frame of symbols impacted by the search excursion. For the frame to be demodulated correctly, the additional amount of power required for symbols not impacted by the search excursion is a function of the search excursion time t_{search}, as noted herein.

### Forward Link Power Control During Search Visit

To overcome the loss of forward link symbols during the t_{search} time period, the mobile station increases the target E_{b}/Nₒ of the forward link closed-loop fast power control by Δ target dB.

This new target E_{b}/Nₒ is set K power control groups (PCG) before the search excursion. The required number K of previous PCGs affected before the search excursion and the required increase in target E_{b}/Nₒ (Δ_{target}) depends on the duration of the search excursion t_{search}; the longer t_{search} is, the larger K. As a result of the increase in the target E_{b}/Nₒ, the forward link power will ramp-up prior to the inter-frequency search.

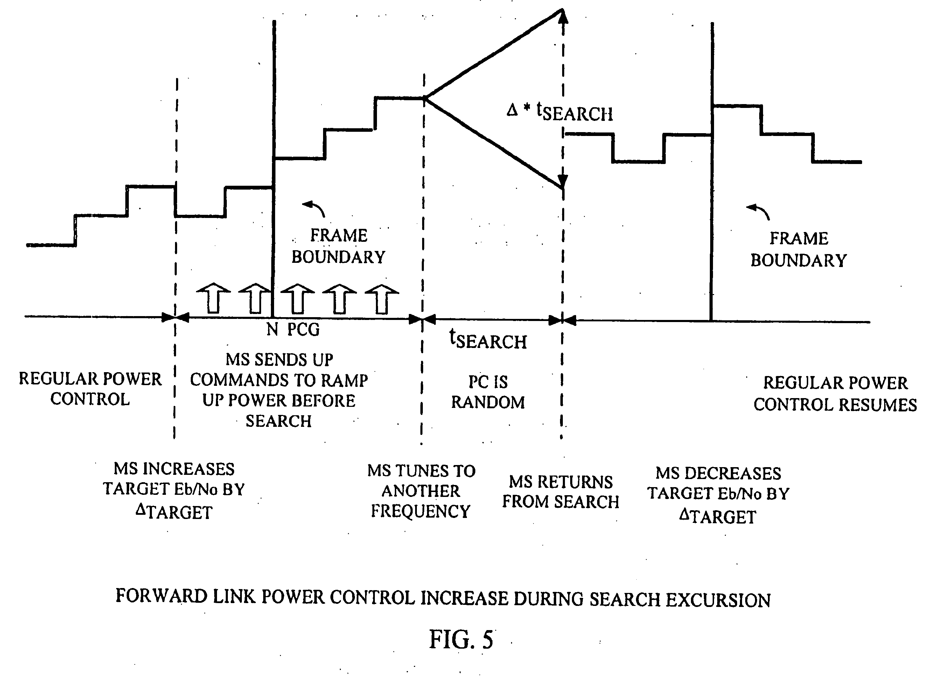

FIG. 5 illustrates the succession of forward link power levels related to an inter-frequency search excursion. Although FIG. 5 is self-explanatory to one of ordinary skill in the relevant art, a brief explanation is provided. After the search excursion, the mobile station **102** resumes demodulation of the forward link symbols of the current frame. At this stage the mobile station **102** knows the total symbol energy received in the current frame and can compare this to the required energy per frame to achieve the target frame error rate. The mobile station **102** can use this metric to increase or decrease the target E_{b}/Nₒ for the remaining power control groups of the frame. If the search excursion expands over a frame boundary, the mobile station **102** may increase its target E_{b}/Nₒ during the next frame to make up for the lost symbols in the first part of the frame. Details regarding closed loop power control can be found, for example, in U.S. Patent Application Nos. 08/752,860 and 08/879,274, entitled METHOD AND APPARATUS FOR ADJUSTING THRESHOLDS AND MEASUREMENTS OF RECEIVED SIGNALS BY ANTICIPATING POWER CONTROL COMMANDS YET TO BE EXECUTED and METHOD AND APPARATUS FOR POWER ADAPTATION CONTROL AND CLOSED-LOOP COMMUNICATIONS filed November 20, 1996 and June 20, 1997, all respectively, and assigned to the assignee of this invention.

### Reverse Link Power Control During Search Visit

While searching on the target frequency f2, the base station **106a** will lose communication with the mobile station **102** and will not receive symbols during the t_{search} time period. To overcome the loss of those symbols, the mobile station **102** can increase the total transmission power on the reverse link by a quantity Δ_{search} dB. The quantity A search depends on the duration of the search t_{search} and corresponds to the additional required symbol energy over the remainder of the frame to overcome the loss of symbols during t_{search} and still permit the base station **106a** to demodulate the frame correctly. The base station **106a** can inform the mobile station **102** of the maximum tolerable increase A search dB in the message directing the mobile station to perform an inter-frequency search (*e.g*., in the ("FCSM")). This value can depend on the maximum tolerable interference currently determined by the base station **106a.**

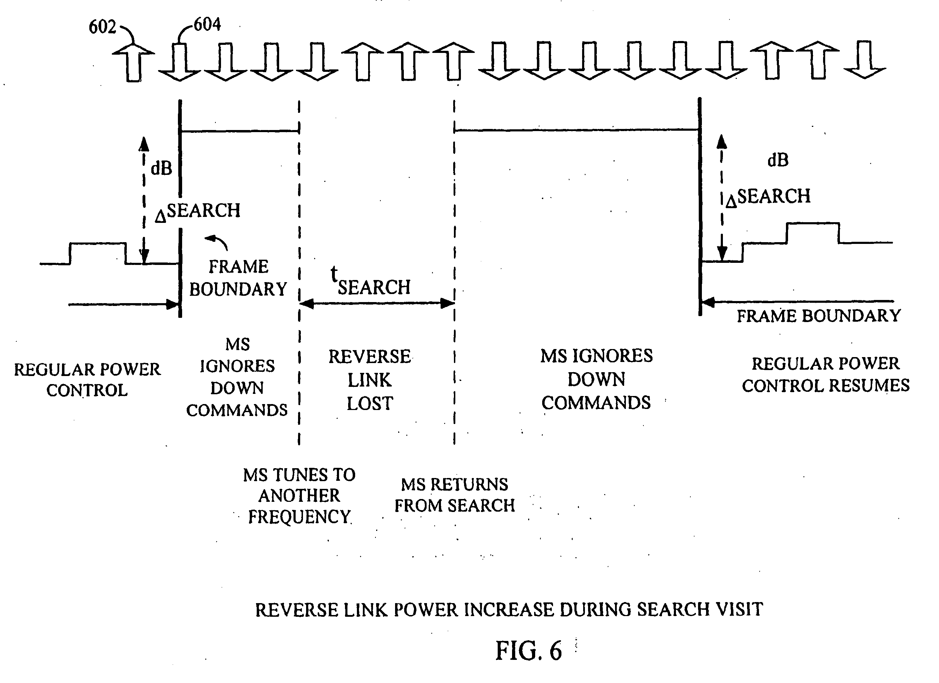

FIG. 6 illustrates the succession of reverse link power increases during a search excursion. While FIG. 6 would be self-explanatory to one of ordinary skill in the relevant art, a brief explanation is provided. During the inter-frequency search frame, transmitted with a power increase, the base station **106a** will send down commands ordering the mobile station **102** to reduce its power. The mobile station **102** simply ignores those down commands until the end of inter-frequency search frame, as shown in FIG. 6. These up and down commands are represented by the large dark arrows **602, 604,** respectively, in FIG. 6. If the search excursion expands over a frame boundary, the mobile station **102** can increase its total transmit power during the next frame in a fashion similar to that noted above to overcome the loss of the initial symbols of the next frame. Regular power control resumes after the frame boundary, as shown in FIG. 6.

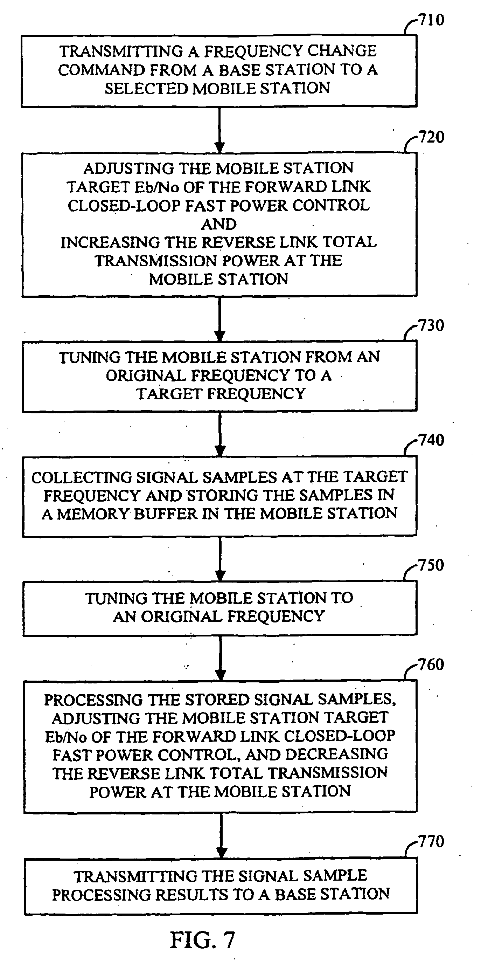

Thus, the method described previously with respect to FIG. 4 can be modified to ensure uninterrupted communication during a search excursion. FIG. 7 shows the steps of the modified method, beginning with step **710,** where the base station **106a** transmits the frequency change command (FCSM) to the mobile station **102.**

Before the mobile station **102** tunes to the target frequency, the target E_{b}/Nₒ of the forward link closed-loop fast power control is increased from a first level to a second level as described above. The mobile station **102** increases the total transmission power on the reverse link by a quantity search dB, as also described above and illustrated in step **720.**

The mobile station then tunes to the target frequency and collects target frequency signal samples, such as chip sample data, and stores the signal samples in the memory **207,** under steps 730-740.

In step 750, the mobile station **102** tunes back to the first frequency when the collection of signal samples is complete. The mobile station **102** processes the signal samples in the memory buffer and resumes communication with the base station **106a** at the first frequency f1. In resuming communications, the mobile station **102** adjusts, the target E_{b}/Nₒ of the remaining power control groups in the frame, and then reduces the target E_{b}/Nₒ by Δ target and the reverse link total transmission power resumes regular control, as illustrated in step **760.**

Finally, under 770, the signal sample processing results, such as at the pilot strength measurements, are transmitted to the base station.

The base station **106a** and the mobile station **102** can be configured to accomplish the foregoing process. Source code to accomplish the foregoing can be readily generated by those of ordinary skill in this technology based on the detailed description provided herein.

While a preferred embodiment of the invention has been illustrated and described above, it is to be understood that various changes may be made therein without departing from the spirit and scope of the invention. For example, the mobile station **102** can use the state of its long code mask to select a starting position within a frame to perform the inter-frequency search. The mobile station **102** can select a randomization period such that the inter-frequency search would typically not expand over a frame. Randomizing the search excursion position between different mobile stations will reduce the reverse link interference and will decrease the total power requirement on the forward link. Consequently, the invention is to be limited only by the scope of the claims that follow.

Although specific embodiments of, and examples for, the invention are described herein for illustrative purposes, various equivalent modifications can be made without departing from the scope of the invention, as will be recognized by those skilled in the relevant art. For example, embodiments are generally shown and described as being implemented in software and performed by a processor. Such software can be stored on any suitable computer-readable medium, such as microcode stored in a semiconductor chip, computer-readable disk, or downloaded and stored from a server. The invention could equally be implemented in hardware, such as by a DSP or ASIC.

The teachings provided herein of the invention can be applied to other communications systems, not necessarily the illustrated communication system described above. For example, while the invention has been generally described above as being employed in the CDMA communication system 100, the invention is equally applicable to other digital or analog cellular communication systems. The invention can be modified to employ aspects of the systems, circuits, and concepts of the various patents and standards described above, all of which are incorporated by reference.

These and other changes can be made to the invention in light of the above detailed description. In general, in the following claims, the terms should not be construed to limit the invention to the specific embodiments disclosed in the specification and the claims. Accordingly, the invention is not limited by the disclosure, but instead its scope is to be determined entirely by the following claims.

## Claims

1. A method for frequency search excursion measurement in a wireless communication system (100) comprising:
operating a receiver (204) on an original frequency;
operating the receiver (204) on a target frequency during a search excursion period;
measuring at least one signal attribute on the target frequency during the search excursion period; and
increasing a target of a normalized energy per bit (Eb/No) of a forward link power control over the original frequency based on duration of the search excursion period.

2. The method of claim 1 further comprising receiving data symbols at a ramped-up power level on the original frequency.

3. The method of claim 1 further comprising receiving a frequency change command at the receiver (204) to switch from receiving signals on the original frequency to receiving signals on the target frequency.

4. The method of claim 1 further comprising: transmitting data symbols at a ramped-up power level to the receiver (204) on the original frequency.

5. The method of claim 1 further comprising generating a report indicative of a measurement of the at least one signal attribute.

6. The method of claim 5 further comprising transmitting the report on the original frequency.

7. An apparatus for frequency search excursion measurement in a wireless communication system (100) comprising:
a receiver (204) configured to:
operate on an original frequency and on a target frequency during a search excursion period;
measure at least one signal attribute on the target frequency during the search excursion period; and
increase a target of a normalized energy per bit (Eb/No) of a forward link power control over the original frequency based on duration of the search excursion period.

8. The apparatus of claim 7 wherein the receiver (204) is configured to receive data symbols at a ramped-up power level on the original frequency.

9. The apparatus of claim 7 wherein the receiver (204) is configured to receive a frequency change command to switch from receiving signals on the original frequency to receiving signals on the target frequency.

10. The apparatus of claim 7 further comprising: a transmitter (238) configured to transmit data symbols at a ramped-up power level to the receiver (204) on the original frequency.

11. The apparatus of claim 7 wherein the receiver (204) is configured to generate a report indicative of a measurement of the at least one signal attribute.

12. The apparatus of claim 11 further comprising a transmitter (210) configured to transmit the report on the original frequency.

## Patentansprüche

1. Ein Verfahren zur Frequenz-Suchexkursionsmessung in einem drahtlosen Kommunikationssystem (100), wobei das Verfahren Folgendes aufweist:
Betreiben eines Empfängers (204) auf einer Ursprungs- bzw. Originalfrequenz;
Betreiben des Empfängers (204) auf einer Zielfrequenz und zwar während einer Suchexkursionsperiode;
Messen von wenigstens einem Signalattribut auf der Zielfrequenz und zwar während der Suchexkursionsperiode; und
Erhöhen eines Ziels bzw. Soll-Werts von einer normalisierten Energiepro-Bit (Eb/No) von einer Vorwärtsverbindungsleistungssteuerung über die Originalfrequenz und zwar basierend auf einer Dauer von der Suchexkursionsperiode.

2. Verfahren nach Anspruch 1, das ferner Empfangen von Datensymbolen mit einem erhöhten bzw. hochgefahrenen Leistungspegel auf der Original-Frequenz aufweist.

3. Verfahren nach Anspruch 1, das ferner Empfangen eines Frequenz-Wechsel-Befehls an dem Empfänger (204) aufweist, zum Wechseln vom Empfangen von Signalen auf der Originalfrequenz zum Empfangen von Signalen auf der Zielfrequenz.

4. Verfahren nach Anspruch 1, das ferner aufweist: Senden bzw. Übertragen von Datensymbolen mit einem hochgefahrenen Leistungspegel an den Empfänger (204) auf der Originalfrequenz.

5. Verfahren nach Anspruch 1, das ferner Erzeugen eines Berichts aufweist, der eine Messung von dem wenigstens einen Signalattribut anzeigt.

6. Verfahren nach Anspruch 5, das ferner Senden bzw. Übertragen des Berichts auf der Originalfrequenz aufweist.

7. Eine Vorrichtung zur Frequenz-Suchexkursionsmessung in einem drahtlosen Kommunikationssystem (100), wobei die Vorrichtung aufweist:
einen Empfänger (204), konfiguriert zum:
Operieren auf einer Original- bzw. Ursprungsfrequenz und auf einer Zielfrequenz und zwar während einer Suchexkursionsperiode;
Messen von wenigstens einem Signalattribut auf der Zielfrequenz während der Suchexkursionsperiode; und
Erhöhen eines Ziels bzw. Sollwerts von einer normalisierten Energiepro-Bit (Eb/No) von einer Vorwärtsverbindungsleistungssteuerung über die Originalfrequenz und zwar basierend auf einer Dauer von der Suchexkursionsperiode.

8. Vorrichtung nach Anspruch 7, wobei der Empfänger (204) konfiguriert ist zum Empfangen von Datensymbolen mit einem erhöhten bzw. hochgefahrenen Leistungspegel auf der Originalfrequenz.

9. Vorrichtung nach Anspruch 7, wobei der Empfänger (204) konfiguriert ist zum Empfangen eines Frequenz-Wechsel- bzw. Änderungsbefehls zum Umschalten vom Empfangen von Signalen auf der Originalfrequenz zum Empfangen von Signalen auf der Zielfrequenz.

10. Vorrichtung nach Anspruch 7, die ferner aufweist: einen Sender (238) konfiguriert zum Senden von Datensymbolen mit einem hochgefahrenen Leistungspegel und zwar an den Empfänger (204) auf der Originalfrequenz.

11. Vorrichtung nach Anspruch 7, wobei der Empfänger (204) konfiguriert ist zum Erzeugen eines Berichts, indikativ bzw. anzeigend für eine Messung von dem wenigstens einen Signalattribut.

12. Vorrichtung nach Anspruch 11, die ferner einen Sender (210) aufweist und zwar konfiguriert zum Senden des Berichts auf der Originalfrequenz.

## Revendications

1. Procédé pour une mesure d'excursion de recherche de fréquence dans un système de communication sans fil (100), comprenant :
actionner un récepteur (204) sur une fréquence d'origine ;
actionner le récepteur (204) sur une fréquence cible pendant une période d'excursion de recherche ;
mesurer au moins un attribut de signal sur la fréquence cible pendant la période d'excursion de recherche ; et
augmenter la cible d'un rapport d'énergie par bit normalisé (Eb/No) d'une commande de puissance en liaison directe sur la fréquence d'origine en fonction de la durée de la période d'excursion de recherche.

2. Procédé selon la revendication 1, comprenant en outre la réception de symboles de données à un niveau de puissance relevé sur la fréquence d'origine.

3. Procédé selon la revendication 1, comprenant en outre la réception d'une commande de changement de fréquence au niveau du récepteur (204) pour commuter d'une réception de signaux sur la fréquence d'origine vers une réception de signaux sur la fréquence cible.

4. Procédé selon la revendication 1, comprenant en outre : transmettre des symboles de données à un niveau de puissance relevé vers le récepteur (204) sur la fréquence d'origine.

5. Procédé selon la revendication 1, comprenant en outre la génération d'un rapport indicatif d'une mesure dudit au moins un attribut de signal.

6. Procédé selon la revendication 5, comprenant en outre la transmission du rapport sur la fréquence d'origine.

7. Dispositif pour une mesure d'excursion de recherche de fréquence dans un système de communication sans fil (100), comprenant :
un récepteur (204) agencé pour :
fonctionner sur une fréquence d'origine et sur une fréquence cible pendant une période d'excursion de recherche ;
mesurer au moins un attribut de signal sur la fréquence cible pendant la période d'excursion de recherche ; et
augmenter la cible d'un rapport d'énergie par bit normalisé (Eb/No) d'une commande de puissance en liaison directe sur la fréquence d'origine en fonction de la durée de la période d'excursion de recherche.

8. Dispositif selon la revendication 7, dans lequel le récepteur (204) est agencé pour recevoir des symboles de données à un niveau de puissance relevé sur la fréquence d'origine.

9. Dispositif selon la revendication 7, dans lequel le récepteur (204) est agencé pour recevoir une commande de changement de fréquence pour commuter d'une réception de signaux sur la fréquence d'origine vers une réception de signaux sur la fréquence cible.

10. Dispositif selon la revendication 7, comprenant en outre :
un émetteur (238) agencé pour transmettre des symboles de données à un niveau de puissance relevé vers le récepteur (204) sur la fréquence d'origine.

11. Dispositif selon la revendication 7, dans lequel le récepteur (204) est agencé pour générer un rapport indicatif d'une mesure dudit au moins un attribut de signal.

12. Dispositif selon la revendication 11, comprenant en outre un émetteur (210) agencé pour transmettre le rapport sur la fréquence d'origine.
